# EUROPEAN PATENT APPLICATION

(11) **EP 2 267 376 A2**
(43) Date of publication of application: **29.12.2010**
(21) Application number: 10010253.2
(22) Date of filing: 28.05.2004
(51) Int. Cl.: F24J 2/46

(54) **Solar collector**

(30) Priority: 13.06.2003 DK 200300888
(62) Divisional of application: 09013161.6
(71) Applicant: VKR Holding A/S, 2970 Hørsholm (DK)
(72) Inventor: Møller, Brent, 2820 Gentofte (DK)
(74) Representative: Nordic Patent Service A/S

(57) **Abstract**

A glazed solar collector with a construction that allows the insulation layer (2) and/or the glazing (4) to be an integral bearing part of the construction. A glazed solar collector in which the cover pane (4) is attached to the frame (1) by a continuous layer of flexible adhesive (18) between the glazing (4) bottom surface and a top surface (19) of the frame (1). A glazed solar collector with a two stage moisture barrier construction. A method for producing a glazed solar collector that comprises molding a rigid foam insulation layer (2) in a sheet material frame (1). A method for producing a glazed solar collector that comprises fitting a cover pane (4) to a frame (1) by providing spacers, a flexible dam and by applying a liquid flexible adhesive sealant (8).

## Description

The present invention relates to glazed solar collectors and methods for producing such collectors. Such solar collectors typically have a rectangular frame containing an absorber, an insulating layer beneath the absorber, and a cover pane spaced above the absorber. The collectors can be integrated or roof mounted on a pitched roof, or may be installed on a flat roof by means of a mounting frame.

### BACKGROUND ART

The Sunwise® series solar collector sold and manufactured by SunEarth Inc. is a glazed flat plate solar collector with a rigid foam insulating layer beneath and in surrounding relation to the copper plate absorber. The insulating layer is placed in a frame build from aluminum extrusions that form sidewalls and a textured aluminum backsheet. The sidewalls are assembled by riveting to create a rectangular frame. The backsheet fits into a slot in the frame and is pop-riveted to the sides and thus a stable container is provided. The insulating layer is placed in the frame and the absorber is mounted in a recess in the upper side of the insulation layer.

A cover pane is fitted onto a retainer ledge in the frame with a high-temperature continuous EPDM U-shaped neoprene gasket to thermally isolate the cover pane from the frame. A removable aluminum cap stripping is then secured to the frame with stainless steel screws. A continuous silicon seal between the cover pane and frame capstrip is applied to minimize moisture from entering the casing. This prior art construction is relatively labor intensive to assemble. Extruded aluminum profiles are also relatively expensive material and require extensive tooling. Another issue with the above construction is stress created by the difference in coefficient of thermal linear expansion between aluminum and glass. Tempered glass has a coefficient of thermal expansion of about 9.0 x 10-6 1/K whereas aluminum has a coefficient of thermal expansion of 20.4-25.0 x 10-6/K. Solar connectors operate over a wide temperature range that may span from minus 20 °C (winter night) to well above 200 °C in stagnation. In a collector with a span of 2 meters the difference in linear expansion between the aluminum and the glass can be several millimeter. The silicon seal between the cover pane and frame capstrip can compensate for some of the expansion difference, but has not proven to be satisfactory under all circumstances, e.g. there have been reported leakage problems with the above type of solar collectors.

### DISCLOSURE OF THE INVENTION

On this background, it is an object of the present invention to provide a light, and relatively inexpensive to manufacture solar collector. This object is achieved in accordance with claim 1, by providing a solar collector comprising an absorber, an insulating layer beneath the absorber, a cover pane spaced above the absorber, and an outer frame having side panels surrounding the periphery of the insulating layer, each side panel having a cover pane attachment ledge directed inwardly or outwardly from the side panel member adjacent to its upper end, the periphery of the cover pane being adhered to the ledges in order to render the cover pane an integral bearing part of the solar collector.

The solar collector becomes a significantly more stable construction when the cover panel is an integral bearing part of the construction. Consequently, the materials used can be dimensioned lighter than in prior art constructions and the less material is needed to produce a lighter solar collector.

The side panels can be adhered to the insulation panel in order to render the insulation panel an integral bearing part of the construction.

The cover pane can be adhered to the frame by a layer of elastic adhesive sealant.

The insulation layer is preferably a rigid foam that is applied in liquid form to the frame.

The outer frame can be made of metal sheet material, preferably pre-painted sheet metal.

The layer of flexible adhesive sealant can have a substantial height to allow substantial displacement between the frame and the cover pane due to difference in coefficient of linear expansion.

It is another object of the present invention to provide a solar collector with improved moisture sealing properties. This object is achieved in accordance with claim 1, by providing a solar collector comprising an absorber, an insulating layer beneath the absorber, a cover pane spaced above the absorber, an outer frame having side panels surrounding the periphery of the insulating layer, a continuous gasket between the side panels and a first peripheral zone on the underside of the cover pane, a continuous layer of flexible adhesive sealant between the side panels and a second peripheral zone on the underside of the cover pane, and the second peripheral zone surrounding the first peripheral zone.

The moisture barrier is effective since it is a two stage barrier and there will under normal circumstances never be a stressing continuous water pressure on the barriers because the barriers are arranged under the cover pane and water retaining components e.g. capstrips that protrude above the cover pane are not required in this construction.

It is another object of the present invention to provide a solar collector with an improved attachment construction between the side panels and the cover pane. This object is achieved in accordance with claim 9, by providing a solar collector comprising an absorber, an insulating layer beneath the absorber, a cover pane spaced above the absorber, and an outer frame having side panels surrounding the periphery of the insulating layer, each side panel having a cover pane attachment ledge directed inwardly or outwardly from the side panel member adjacent to its upper end, the cover pane being attached to the ledges by a continuous layer of flexible adhesive sealant between a peripheral zone on the underside of the cover panel and the upper surface of the ledges.

The layer of flexible adhesive attaches the underside of the cover pane in a secure and esthetically attractive fashion to the frame.

It is another object of the present invention to provide a light and relatively inexpensive to manufacture solar collector with a protection from environmentally produced damaging effects and from jolts and impacts during transport. This object is obtained in accordance with claim 10 by providing a solar collector comprising an absorber, an insulating layer beneath the absorber, a cover pane spaced above the absorber, a sheet material frame having side panels surrounding the insulation layer, and a molded casing with a bottom panel beneath the insulating layer and upstanding walls in surrounding relation to the insulating layer, whereby the side panels are at least partially embedded in the upstanding walls.

The embedded side panels render the frame and the casing an integral bearing construction that is strong and easy to manufacture.

The casing can be made of a material with a substantial wood fiber content.

Each side panel may have a cover pane attachment ledge directed outwardly from the side panel member adjacent to its upper end. The attachment ledge may terminate in a downward rim. The ledge and the rim cover the flashing carrying the solar collector and allow a watertight transition between the flashing and the solar collector.

The outer frame can be provided with one or more upwardly directed spacers for maintaining a distance between the ledges and the cover pane while fitting the cover pane, preferably in the form of an upstanding rim.

Further objects, features, advantages and properties of the solar collectors and methods of producing a solar collector according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Fig. 1 is a cutaway perspective view of a solar collector according to the invention,
Figs. 2a to 2c are partial cross-sectional views of the solar collector of Fig. 1 at different temperatures,
Figs. 3a and 3b show a partial cutaway perspective views of a solar collector according provided with embedded attachment and support elements,
Fig. 4 shows a three side view of a sheet metal frame in a production stage,
Fig. 5 shows a perspective view on a mold for use with a method according to the invention,
Figs. 6 and 7 are cross-sectional views of two further preferred embodiments of solar collector according to the invention,
Fig. 8 is a cross-sectional view of another embodiment of the invention,
Fig. 9 is a cross-sectional view of yet another embodiment of the invention,
Figs. 10a, 10c and 10b are perspective cutaway views of variations of the embodiments shown in Figs. 8 and 9,
Figs. 11a, 11b, 11c and 11d show a detail of a bracket for use in the solar collector according to any of the embodiments.

### DETAILED DESCRIPTION

The preferred embodiment of the invention will be described specifically with reference to a flat plate collector assembly although it is understood that other absorber types may be employed with a minimum change in construction.

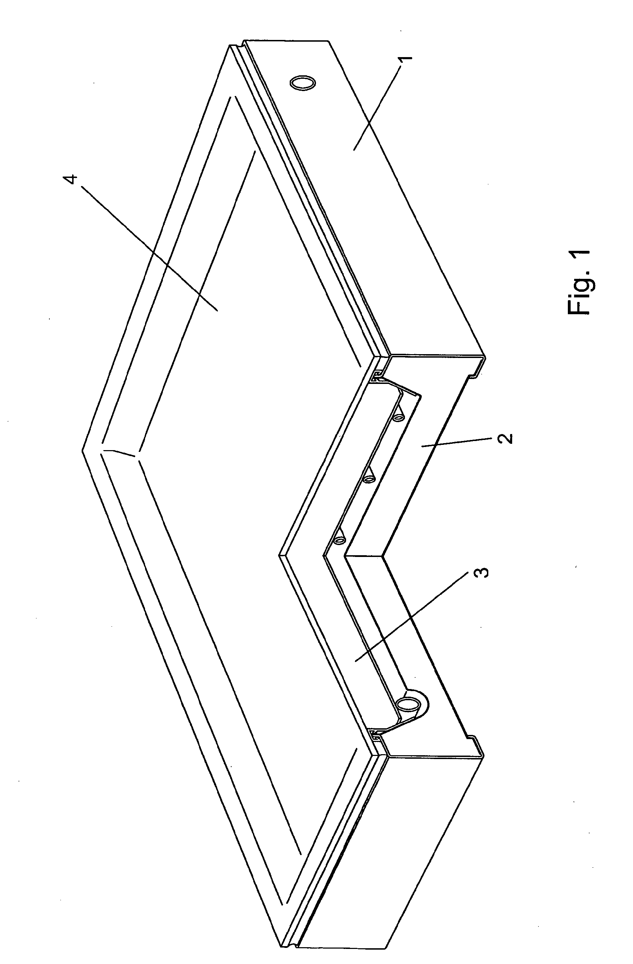

Fig. 1 shows by way of illustrative example a flat plate solar energy collector. Seen in cutaway perspective view of Fig. 1 the solar collector has a frame 1, insulation layer 2, absorber plate 3 and cover pane 4. The frame, the insulation layer and the cover pane form a case with an enclosure. The enclosure is used to provide support for the absorber, and to protect the collector from heat loss due to wind, plus the important function of keeping moisture from rain, snow and dew out of the collector.

The insulation layer 2 is made of a rigid foam urethane (PUR) or polyisocyanurate (PIR). These materials have an excellent insulation value per unit of thickness and are easy to handle because they are very light. They have also a higher compression resistance than e.g. mineral wool based insulation materials.

The upper surface of the insulation layer 2 is covered with a reflective silver foil and provided with a recess sized to be able to receive the absorber 3. The absorber 3 is received in the in the recess and except for its upper side surrounded by the insulation layer 2.

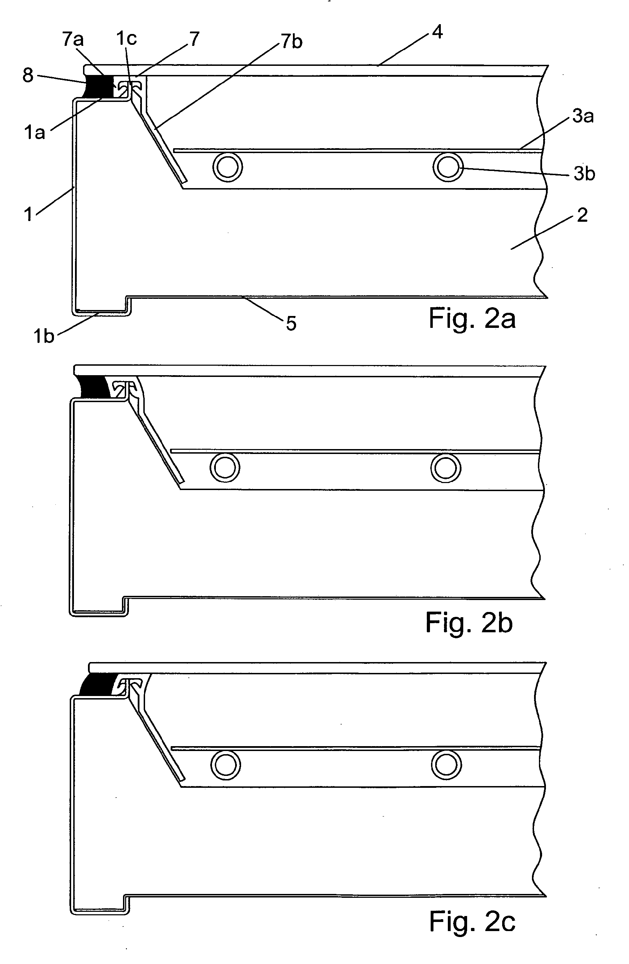

As shown in Fig. 2a the absorber comprises an absorber plate 3a and an absorber tubing 3b that channels the medium, typically water, used to transport the collected thermal energy. The absorber plate 3a and the copper tubing 3b may suitably consist of steel, copper or aluminum sheet or tubing, respectively. The absorber plate 3a and tubing 3b penetrating the case are thermally insulated from the case at all points of support, e.g. with high-temperature round EPDM neoprene gaskets.

The absorber plate 3a is provided with a semi-selective or a selective coating to improve the heat absorbing capacity of the absorber plate 3a.

The solar collector may also be provided with a backsheet 5 to protect the insulation layer 2 from weather influences and to further increase the rigidity of the construction. The backsheet is suitably formed by a plastic sheet or film material weaker than the frame material, e.g. polypropylene sheet or aluminum foil. A backsheet can be altogether avoided if the bottom side of the insulation layer is coated.

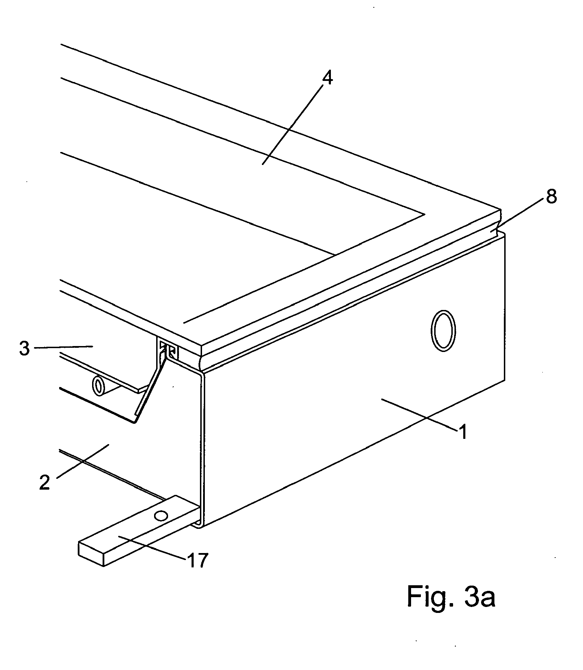

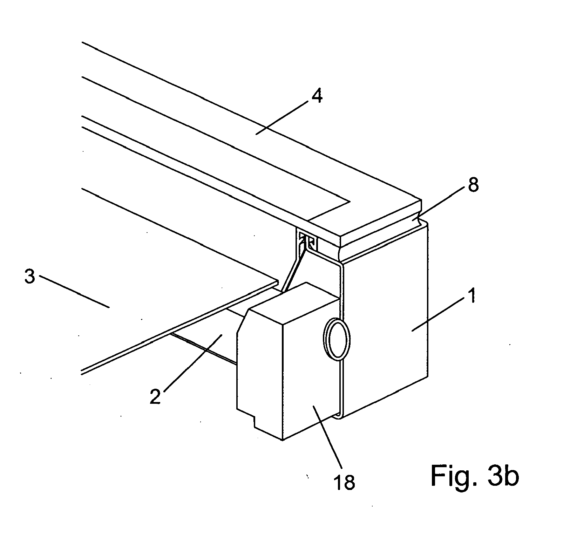

Figs. 3a and 3b show how a jacknut 17, tube support 18 or other fixtures can be provided on the inside of the outer frame for facilitating the affixation of the solar collector to a roof construction or for facilitating the connections of the tubing.

An important aspect of the invention resides in the construction and arrangement of the outer frame 1. The outer frame 1 comprises four side panels that are part of one rollformed sheet material profile. The sheet material is suitably made of sheet metal, preferably pre-painted aluminum.

The side panels 1 are substantially shaped as a U-profile with an upper inwardly directed latch la and a lower inwardly directed latch 1b. The upper latch 1a is provided with an upstanding rim 1c.

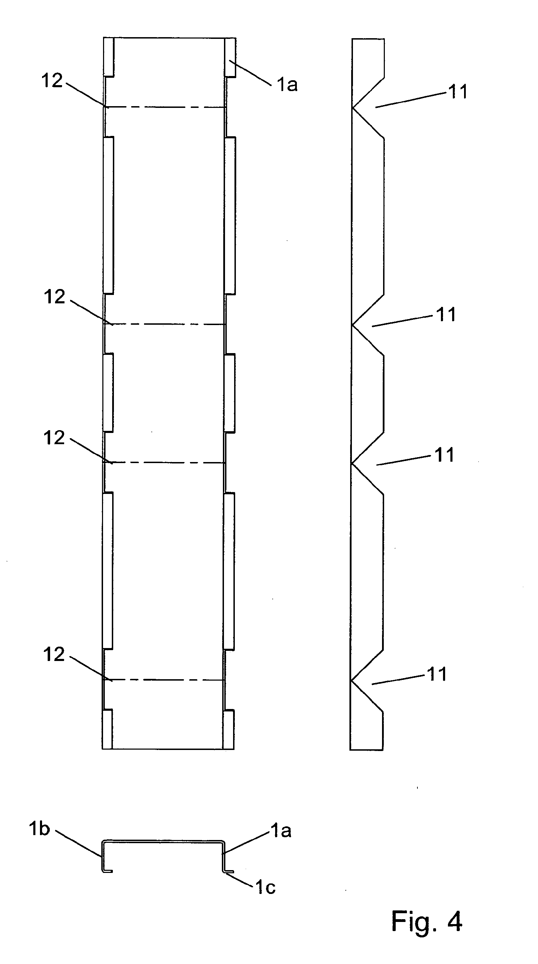

The sheet material profile in a state before assembly is shown in more detail in Fig. 4. The U-profile is notched at four sites 11 so that the U-profile can be bent along folding lines 12 and the free longitudinal ends of the U-profile are connected by welding to form a closed rectangular frame.

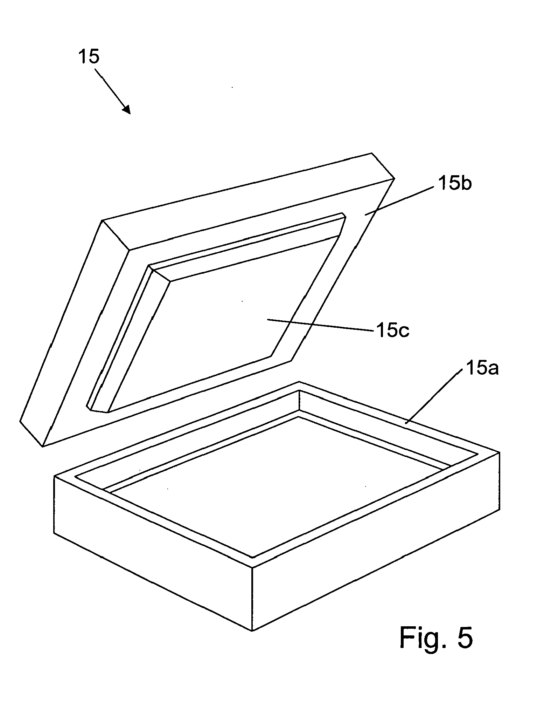

With reference to Fig. 5, the rectangular frame, together with a reflective foil and eventually with a loose backsheet 5, jacknuts 17 and tube support 18 are placed in a lower mold half 15a for producing the solar collector.

The lower mold half 15a is provided with a recess with contours that correspond to the outer contours of the frame and the bottom side of the insulation layer 2. The mold 15 is closed by an upper mold half 15b that is provided with a protrusion 15c with contours that correspond to the contours of the recess in the upper surface of the insulation layer 2. Then, liquid plastic foam such a PUR or PIR is injected into the mold 15. When the foam has hardened the mold 15 is opened and the assembly of the frame and the insulation layer 2 with the reflective foil and eventually a backsheet 5 is removed from the mold.

The during the molding procedure the insulation layer has attached itself to the inner surfaces of the rectangular frame and to the inserts 17,18. The inside surfaces of the side panels 1 adhere thus to the insulation layer 2. The side panels 1 on their own are relatively thin and buckle sensitive. The rigid foam insulation layer is however a relatively stable body preventing the side panels from buckling under load. By adhering the side panels 1 to the periphery of the insulation 2, the warp resistance of the assembly is significantly improved because the insulation layer is an integral bearing part of the construction that contributes to the overall stability and stiffness of the solar collector.

The upstanding rim 1c acts as a spacer that supports the cover pane 4 and maintains a distance between the upper surface of latch 1a and the bottom surface of the cover pane 4 during fitting of the cover pane. A continuous EPDM neoprene gasket 7 is placed on the upstanding rims 1c. The gasket 7 is in sealing abutment with a peripheral zone of the bottom surface of the cover pane 4 to form a moisture barrier protecting the enclosure and to insulate the cover pane 4 thermally from the side panels 1.

The gasket is provided on its outwardly facing side with a flexible dam 7a. The flexible dam 7a is arranged to define a hollow space between the rim and the dam itself. The hollow space allows the flexible dam to move unhindered. The gasket is provided on its inwardly facing side with a flap 7b extending over the insulation layer and under the absorber 3. The flap protects the silver foil and the insulation layer from the sides of the absorber plate 3a.

When the gasket has been placed on the rim 1c, the cover pane 4 is placed on top of the gasket 7 and the space between the upper side of the latch 1a and the bottom surface of the cover pane 4 is filled with a flexible adhesive sealant such as a silicone based sealant in liquid form. The flexible dam 7a serves as a barrier preventing the liquid flexible adhesive sealant from entering the cavity when it is applied.

When the sealant has cured it forms a flexible layer that securely attaches the cover pane 4 to the side panels. The layer of flexible adhesive sealant also forms a second moisture barrier protecting the enclosure. The enclosure is thus protected from moisture by a two-stage barrier, thus, reducing the likeliness of leakage significantly.

The layer of flexible adhesive sealant attaches the cover pane 4 to the side panels so that the cover pane 4 becomes an integral bearing part of the construction that contributes to the overall stability and stiffness of the solar collector. There is therefore no need for capstrips and thus there is no risk of water or snow to remain caught at the transition between the cover pane and the capstrip.

Fig. 2a illustrates the cross-section of the solar collector at room temperature. Since this is the temperature at which the cover pane was fitted to the frame there are no discrepancies in length between the aluminum frame and the tempered glass cover pane.

Fig. 2b illustrates the cross-section of the solar collector at a high temperature such as may e.g. occur during stagnation, i.e. when the heat transporting medium is not flowing so that the heat is not transported away. The cover pane has expanded more than the frame with the temperature raise. The difference in length is compensated for by an outwardly directed shear deformation of the layer of flexible adhesive sealant 8.

Fig. 2c illustrates the cross-section of the solar collector at a low temperature such as may e.g. occur in a cold winter night. The cover pane has contracted more than the frame with the temperature fall. The difference in length is compensated for by an inwardly directed shear deformation of the layer of flexible adhesive sealant 8.

Flexible adhesive sealants such as silicon based sealant can well endure such deformation and still maintain good adhesion to the cover pane and the frame both at low and high temperatures. Because of the low elasticity modus of the flexible adhesive sealant the shear forces acting on the cover pane and the frame are negligible.

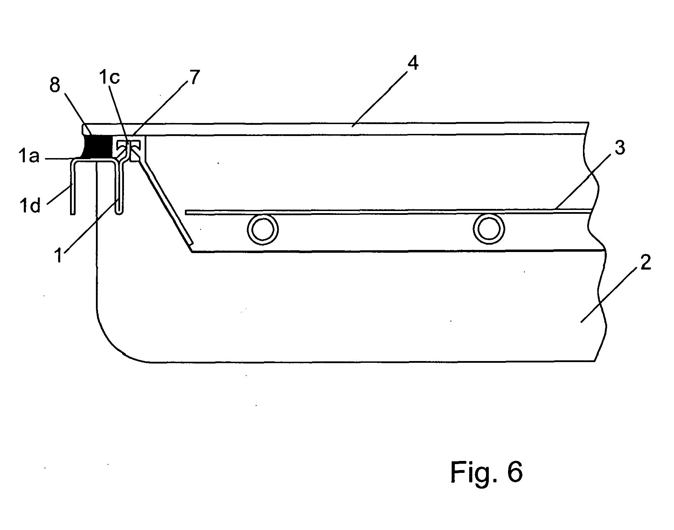

The solar collector illustrated in Fig. 6 according to a further preferred embodiment of the invention is particularly suitable for integrated roof mounting. The solar collector comprises an insulation layer 2 of rigid polymeric foam. The upper surface of the insulation layer 2 is provided with a recess and is covered with a heat reflective metal foil to reduce the heat load on the insulation material. An absorber 3 with corresponding tubing is placed in the recess in the insulation layer 2.

The outer frame is made from rollformed aluminum sheet and is adjusted to integrated roof mounting on a flashing of the roof construction by directing the ledge 1a outward and ending it in a downward rim 1d. The ledge 1a and the downward rim 1d fit over the flashing (not shown) on the roof construction to obtain a watertight construction. The outer frame comprises an upstanding rim 1c to space the cover pane from the ledge 1c during fitting of the cover pane.

The sides of the outer frame panels 1 are embedded in the rigid foam insulation layer 2 in order to support the side panel 1 against buckling and to render the insulation layer 2 an integral bearing part of the solar collector construction. The outer frame is provided with a spacer 1c provided with a gasket 7 identical with the spacer 1c described above with reference to Figs. 1 to 4. The cover pane 4 is attached to the outer frame 1 by applying a liquid flexible adhesive sealant as described above. Because the solar collector according to this preferred embodiment is intended for integral roof mounting, no outer protection for the insulation layer 2 in the form of a backsheet or outer side walls is provided. The overall construction is therefore light and material saving.

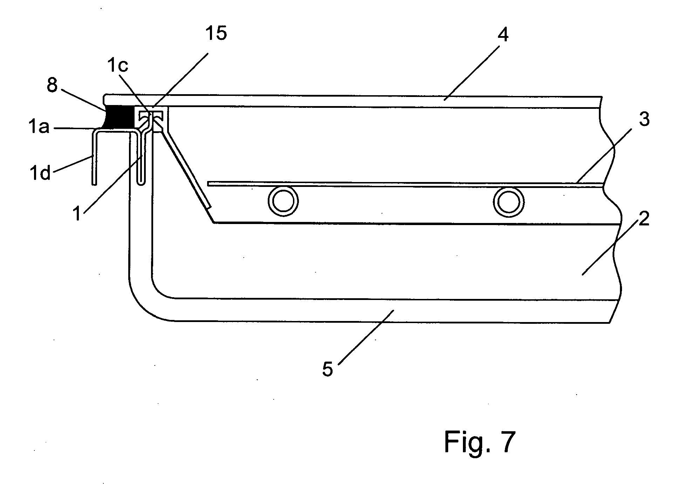

Fig. 7 shows an embodiment that is similar to the embodiment of Fig. 6, apart from the provision of a protective casing 5 below and in surrounding relation to the insulation layer 2. In certain circumstances it is namely of advantage to provide the insulation layer 2 with a protection from environmentally produced damaging effects and from jolts and impacts during transport and mounting. The casing 5 is made from an impact resistant moldable material, e.g. a material having a substantial wood fiber content. The casing has a bottom panel and upstanding side walls that surround the insulation layer 2. The side walls 1 of the outer frame are embedded in the upright walls of the casing 5. The outer frame and the casing 5 thus become one integral bearing structure that is light and easy to manufacture.

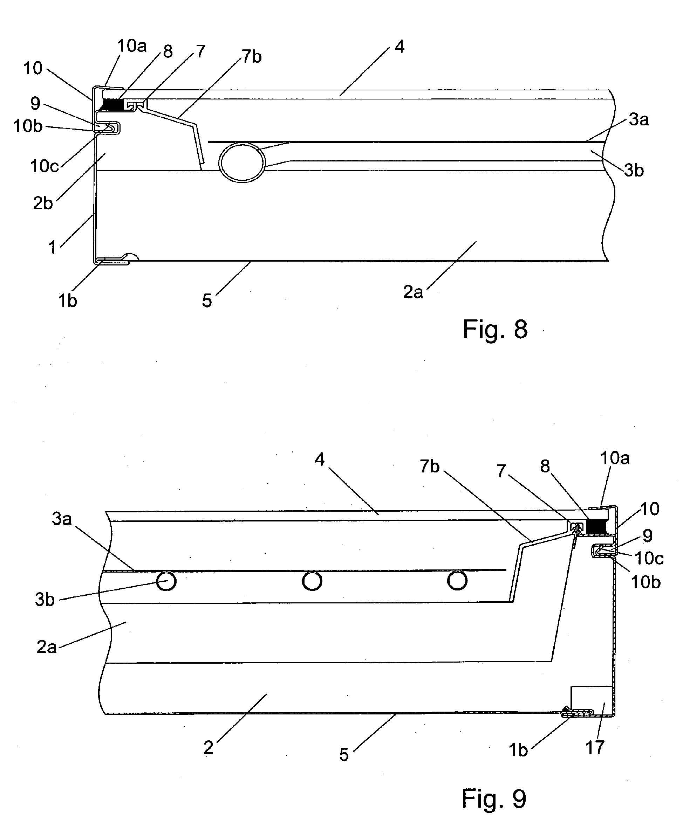

Fig. 8 illustrates a further preferred embodiment of the invention in cross-section. The collector comprises like the previously described embodiments an absorber with an absorber plate 3a and an absorber tubing 3b that channels the medium, typically water, used to transport the collected thermal energy.

The rigid foam insulation layer 2 is replaced with a heat resistant insulation layer 2a,2b and the upper surface is covered with a reflective silver foil. The heat resistant insulation layer is made from e.g. mineral wool or glass wool. The heat resistant insulation layer does not adhere to the inner walls of the casing 5. The heat resistant insulation layer comprises a bottom mat 2a below the absorber 3 and a circumferential dam 2b surrounding the absorber and supporting the flap 7b.

Fig. 9 illustrates another preferred embodiment of the invention in cross-section. The collector comprises like the previously described embodiments an absorber with an absorber plate 3a and an absorber tubing 3b that channels the medium, typically water, used to transport the collected thermal energy.

The rigid foam layer 2, is supplemented with a heat resistant insulation layer 2a there above. The upper surface of the heat resistant insulation layer 2a is covered with a silver foil. The heat resistant insulation layer 2a is made from e.g. mineral wool a glass wool and protects the rigid foam layer 2 from the heat of the absorber to prevent deterioration of the rigid foam layer 2. The commercially available rigid foams, such as PUR, deteriorate relatively quick is exposed to temperatures above 150°, a temperature that part of the insulation layer close to the absorber may well reach.

The embodiments of Figs. 8 and 9 have coincidentally been illustrated in combination with protective stripping 10, but they could just as well be realized without the protective stripping 10.

In both Fig. 8 and Fig. 9 the cover pane 4 is connected to the outer frame 1 by a silicon layer 8. The outer frame 1 is almost identical to the outer frame described in detail with reference to Figs. 1 to 7. Apart from the earlier described features, the preferably rollformed frame 1 is further provided with a circumferential groove 9. The groove 9 is formed by folds in the side panel and serves to increase the rigidity of the overall structure and to receive a ledge 10b of a protective stripping 10.

The protective stripping 10 has a substantially U-shaped profile, with a top ledge 10a covering the upper edge of the glass pane 4 and a lower ledge 10b inserted in the groove 9. The lower ledge 10b is folded over to form an arresting lip 10c. The tip of the arresting lip 10c engages the inner upper surface of the groove 9 and thereby secures the protective stripping 10 to the frame 1. The top ledge 10a is slightly sloping downwards towards the cover pane 4 so that only its tip abuts with the cover pane 4, thus avoiding that water can get trapped between the ledge 10a and the cover pane 4.

The protective stripping has several functions.

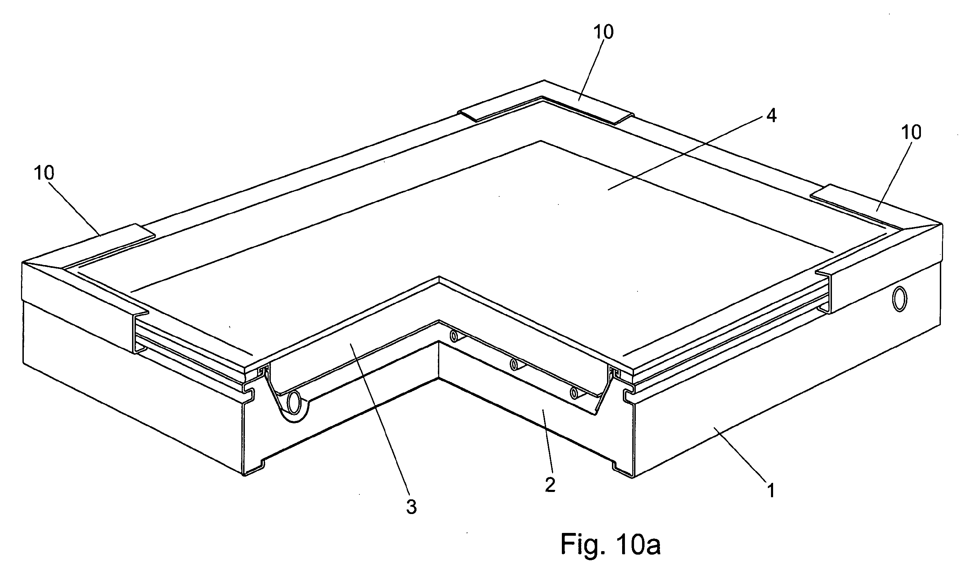

When the protective stripping 10 is only placed on the corners of the frame 1, as shown in Fig. 10a, the protective stripping 10 forms a redundant means of securing the cover pane 4 to the frame 1 that will prevent the cover pane 4 from falling should the silicon connection 8 between the frame 1 and the cover pane 4 against expectations ever fail.

The cover pane 4 is in all the described embodiments preferably made from tempered glass, i.e. a strong and durable glass quality. However, the edges of the pane are particularly sensitive to mechanical impact and could be damaged by objects hitting the edge (e.g. hailstones), leading to a chipped or cracked cover pane.

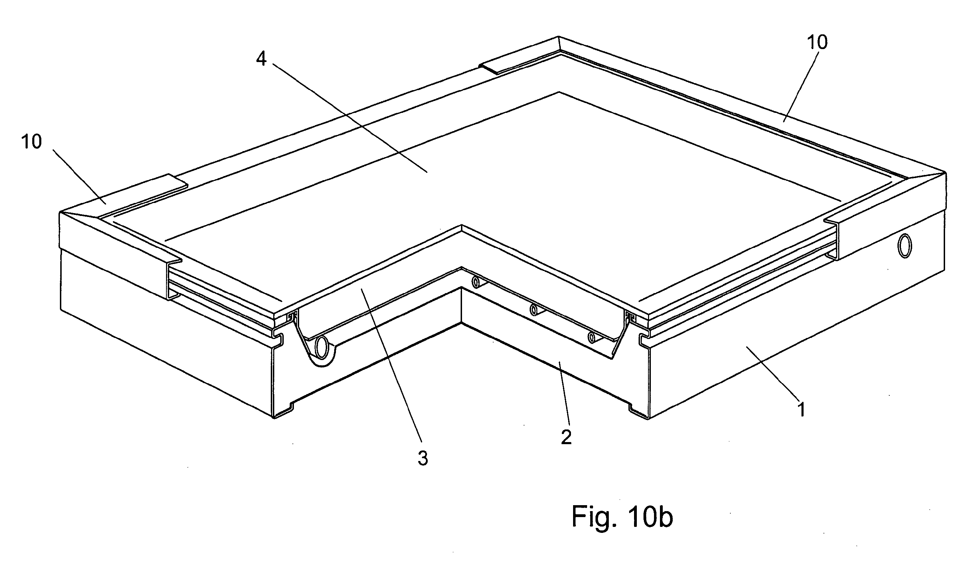

When the protective stripping 10 is placed over at least one side of the edge of the cover pane 4 and on the remaining corners of the frame 1 as shown in Fig. 10b, the protective stripping 10 also forms a protection of the cover pane 4 from mechanical impact. The side of the collector with the "protected" edge is preferably the "upper" edge when the collector is mounted on a sloping roof.

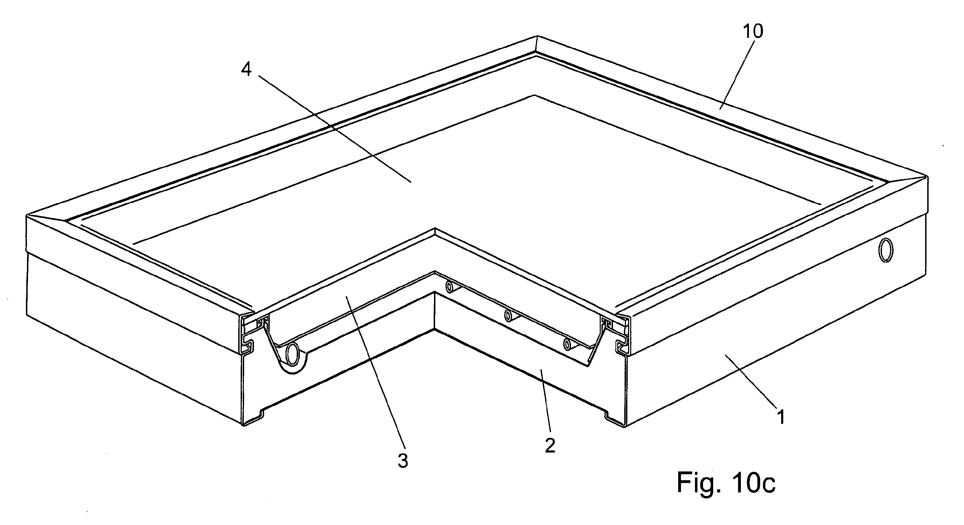

When the protective stripping 10 is placed all around the cover pane 4 as shown in Fig. 10c, the protective stripping 10 forms an even better protection from mechanical impact and serves to protect the silicon layer 8 from weather influences such as moist and direct sunlight. A ventilation space is provided between the protective stripping 10 and the silicon layer 8.

The protective stripping 10 can be applied not only to the embodiments in which it is shown, but also to the embodiments shown in Figs. 1 to 7.

The solar collector according to the embodiments of Figs. 8, 9, 10a, 10b, 10c may also be provided with a backsheet 5. The backsheet 5 is received in a fold in the internally directed ledge 1b and fixed thereto by rivets (not shown). The backsheet 5 is suitably formed by a plastic sheet or film material weaker than the frame material, e.g. polypropylene sheet or aluminum foil.

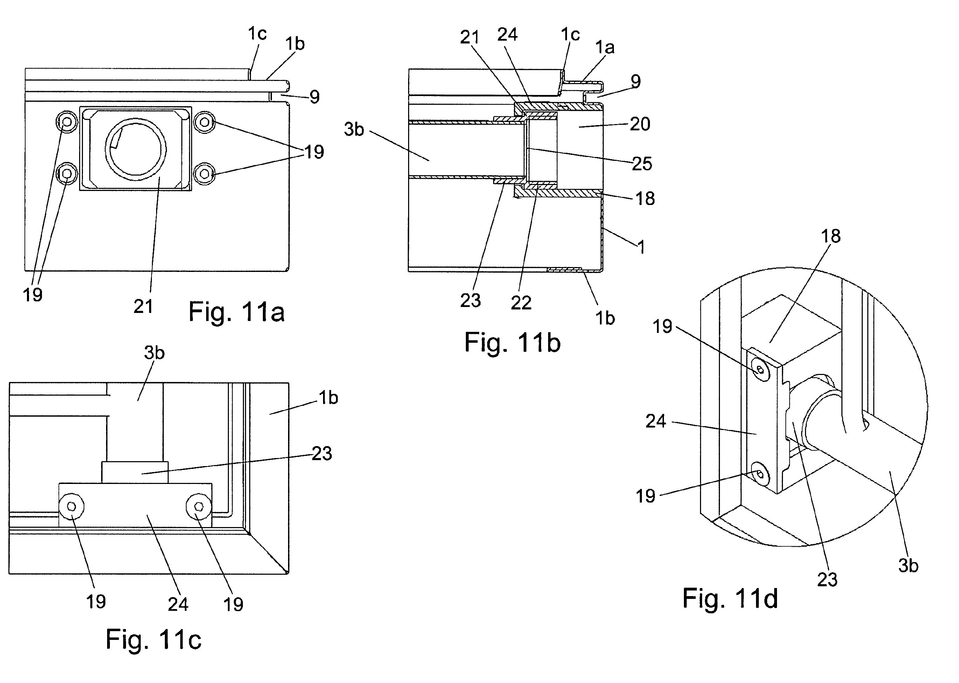

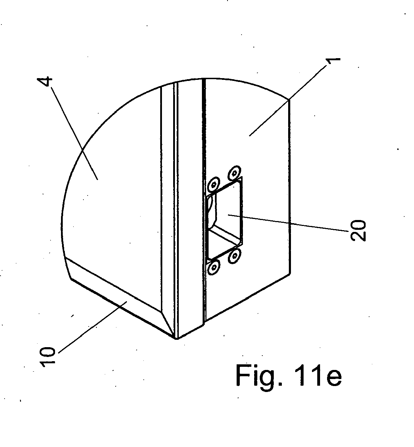

Figs. 11a, 11b, 11c and 11d illustrate a bracket 18 holding a pipe coupling 21 that serves to connect the tubing 3b to the outer tubing (not shown). The bracket 18 comprises a preferably plastic body that is secured to the inner side of the frame 1 by screws 19. The bracket 18 is provided with a substantially rectangular recess 20 in which the pipe coupling 21 is received. The recess 20 is upwardly open on the side of the bracket that faces the absorber. The pipe coupling 21 is inserted in the upwardly open part of the recess and secured in the recess by a locking plate 24. The pipe coupling 21 has a box-shaped section 22 that matches the rectangular recess 20 and a cylindrical section 23 that protrudes from the bracket 18 towards the absorber. The pipe coupling 21 is provided with a through-going bore 25. The part of the bore extending through the box-shaped section 22 is provided with and internal thread. The part of the bore extending through the cylindrical section 23 is dimensioned to receive an end of the tubing 3b therein. The tubing 3b is connected to the cylindrical section 23 by welding, soldering or other suitable technique. The internal thread in the bore in the box-shaped section 22 serves to receive the outer tubing (not shown), the extremity of which is provided with a matching thread. A substantial torque needs to be applied to secure the outer tubing tightly to the pipe coupling 18, due to sealing material being wound around the threaded extremity of the outer tubing. The sealing material, is compressed between the threads when the outer tubing is screwed into the pipe coupling, causing a relatively high torque to be applied in the process. The pipe coupling 18 is capable of resisting this torque since the box-shaped 22 section is tightly received in the rectangular recess 20 in the bracket 18 and prevents the pipe coupling 21 from rotating.

The bracket assembly can be used not only to the embodiment in which it is shown, but also to the embodiments shown in Figs. 1 to 10c.

Although the present invention has been described in detail for purpose of illustration, it is understood that such detail is solely for that purpose, and variations can be made therein by those skilled in the art without departing from the scope of the invention.

## Claims

1. A solar collector comprising:
an absorber, an insulating layer beneath the absorber,
a cover pane spaced above the absorber, and
an outer frame having side panels surrounding the periphery of the insulating layer,
each side panel having a cover pane attachment ledge directed inwardly or outwardly from the side panel member adjacent to its upper end,
the periphery of bottom side of the cover pane being adhered to the ledges in order to render the cover pane an integral bearing part of the solar collector.

2. A solar collector according to claim 1, wherein the side panels adhere to the insulation panel in order to render the insulation panel an integral bearing part of the construction.

3. A solar collector according to claim 1 or 2, wherein the cover pane is adhered to the frame by a layer of elastic adhesive sealant to render the cover pane an integral bearing part of the construction.

4. A solar collector according to any of claims 1 to 3, further provided with a backsheet, whereby the backsheet adheres to the insulation layer to render the backsheet an integral bearing part of the construction.

5. A solar collector according to any of claims 1 to 4, wherein the insulation layer is a rigid foam that is been applied in liquid form to the frame.

6. A solar collector according to any of claims 1 to 5, wherein the outer frame is made of sheet material, preferably metal sheet.

7. A solar collector according to any of claims 1 to 6 in which the layer of flexible adhesive sealant has a substantial height to be able to deform and compensate for substantial displacement between the frame and the cover pane due to difference in coefficient of linear expansion between the frame material and the cover pane material.

8. A solar collector comprising:
an absorber, an insulating layer beneath the absorber,
a cover pane spaced above the absorber,
an outer frame having side panels surrounding the periphery of the insulating layer,
a continuous gasket between the side panels and a first peripheral zone on the underside of the cover pane,
a continuous layer of flexible adhesive sealant between the side panels and a second peripheral zone on the underside of the cover pane, and
the second peripheral zone surrounding the first peripheral zone.

9. A solar collector comprising:
an absorber, an insulating layer beneath the absorber,
a cover pane spaced above the absorber,
an outer frame having side panels surrounding the periphery of the insulating layer,
each side panel having a cover pane attachment ledge directed inwardly or outwardly from the side panel member adjacent to its upper end, and
the cover pane being attached to the outer frame by a continuous layer of flexible adhesive sealant between a peripheral zone on the underside of the cover panel and the upper surface of the ledges.

10. A solar collector comprising:
an absorber, an insulating layer beneath the absorber,
a cover pane spaced above the absorber,
a sheet material frame having side panels surrounding the insulation layer, and
a molded casing (5) with a bottom panel beneath the insulating layer and upstanding walls in surrounding relation to the insulating layer,
whereby the side panels are at least partially embedded in the upstanding walls.

11. A solar collector according to claim 10, wherein the casing is made of a material with a substantial wood fiber content.

12. A solar collector according to claim 10 or 11, wherein each side panel has a cover pane attachment ledge directed outwardly from the side panel member adjacent to its upper end and the attachment ledge terminates in a downward rim.

13. A solar collector according to any of claims 10 to 12, wherein the outer frame is provided with one or more upwardly directed spacers for maintaining a distance between the ledges and the cover pane while fitting the cover pane, preferably in the form of an upstanding rim.
